# EUROPÄISCHE PATENTANMELDUNG

(11) **EP 4 235 005 A2**
(43) Veröffentlichungstag der Anmeldung: **30.08.2023**
(21) Anmeldenummer: 23170972.6
(22) Anmeldetag: 30.08.2016
(51) Int. Cl.: F16L 23/18

(54) **FLACHDICHTUNG WEICHSTOFFDICHTUNG MIT RANDEINFASSUNG**

(62) Teilanmeldung aus: 16186400.4
(71) Anmelder: Frenzelit GmbH, 95460 Bad Berneck i.F. (DE)
(72) Erfinder: STEINERT, Theresa, 95195 Röslau (DE); WILL, Andreas, 95686 Fichtelberg (DE)
(74) Vertreter: Becker, Eberhard

(57) **Zusammenfassung**

Die vorliegende Erfindung stellt eine Weichstoffdichtung bereit, umfassend ein Weichstoffmaterial in der Form eines flachen Rings und mindestens einer Randeinfassung. Die Randeinfassung umfasst dabei einen Metall-Kompositwerkstoff, der eine Metalllage und eine Polymerlage umfasst. Die Polymerschicht dient dazu die Anpassung an Unebenheiten einer abzudichtenden Fläche im Bereich der Randeinfassung zu verbessern. Somit trägt die Randeinfassung selbst erheblich zu abdichtenden Wirkung der Weichstoffdichtung bei.

## Beschreibung

### Hintergrund der Erfindung

Die vorliegende Erfindung betrifft eine Weichstoffdichtung mit einer Randeinfassung und insbesondere eine Weichstoffdichtung mit mindestens einer Randeinfassung aus einem Metall-Kompositwerkstoff, bevorzugt einem Metall-Polymer-Kompositwerkstoff.

### Beschreibung des Standes der Technik

Weichstoffdichtungen (auch Flachdichtungen genannt) finden in vielen Gebieten der Industrie Anwendung. Insbesondere sind Weichstoffdichtungen in industriellen Großanlagen als Flansch- oder Deckeldichtungen im Einsatz. Eine beispielhafte Offenbarung für die Zusammensetzung von Weichstoffdichtungswerkstoffen ist in der Europäischen Patentschrift mit der Veröffentlichungsnummer EP 0 734 472 B1 bereitgestellt, die in ihrer Gesamtheit und insbesondere mit ihrer Beschreibung auf Seite 3, Zeile 1 bis Seite 4, Zeile 32 und Tabelle 1 der Patentoffenlegungsschrift in dieser Beschreibung aufgenommen ist. Gleiches gilt für die Offenbarung in [0021]-[0025] der EP 1 293 709 A1 und Seite 9, Zeile 12 bis Seite 11, Zeile 19 der und Beispiele 1-3 der DE 3232255 A1. Weitere Ausführungsformen für die Weichstoffmaterialzusammensetzung sind in den Beispielen dieser Beschreibung angegeben. Jedoch sollte die genaue Zusammensetzung der Weichstoffdichtung der vorliegenden Erfindung nicht eingeschränkt werden, da die Anzahl möglicher Inhalts- und Zusatzstoffe nahezu unmöglich komplett anzugeben ist und für die Funktion der vorliegenden Erfindung im Wesentlichen unerheblich ist.

Metallische Einfassungen für Weichstoffdichtungen werden für viele Dichtungsanwendungen eingesetzt, um folgende Vorteile zu erzielen:
- Abschirmung des Dichtungsquerschnitts gegen das Medium
- Verhinderung von Kontaminationen des Mediums durch Herauslösung von Dichtungsbestandteilen
- Abschirmung, um Eindringen des Mediums in das Dichtungsmaterial zu vermeiden (in der Praxis lässt sich eine vollständige Abschirmung gegen das Medium in den seltensten Fällen realisieren)
- Mechanische Verstärkung der Dichtung
- Schutz vor Herausdrücken der Dichtung
- Erhöhung der mechanischen Stabilität

Diese theoretischen Vorteile von metallischen Randeinfassungen bei Weichstoffdichtungen haben dazu geführt, dass einige Standards bestimmter Anwendungen eine metallische Randeinfassung vorschreiben. Jedoch weisen metallische Einfassung in der Praxis erhebliche Nachteile auf. Generell muss eine Weichstoffdichtung verpresst werden, damit Dichtheit erreicht werden kann. In der Regel gilt: je mehr Flächenpressung vorhanden ist, desto dichter wird das System.

Eine metallische Einfassung beeinflusst die Leckage einer Weichstoffdichtung jedoch aus folgenden Gründen negativ:
- Metall verformt sich beim Einbau nicht, bzw. nur geringfügig. Die Weichstoffdichtung wird weniger stark verpresst, da die metallische Einfassung einen Großteil der Verformungskraft/Verpressungskraft in Anspruch nimmt;
- Durch die reduzierte Verpressungskraft resultiert eine erhöhte Oberflächenleckage (Dichtung kann sich nicht mehr so gut an Oberflächenrauigkeiten anpassen) und Querschnittsleckage (Dichtung wird nicht mehr so stark verpresst - höherer Porenanteil)
- Dieser Effekt lässt sich bei allen Weichstoffdichtungen feststellen, egal auf welchem Material die Weichstoffdichtung basiert (z.B. Graphit-Weichstoffdichtung, Faser-Weichstoffdichtung, Glimmer-Weichstoffdichtung etc.)

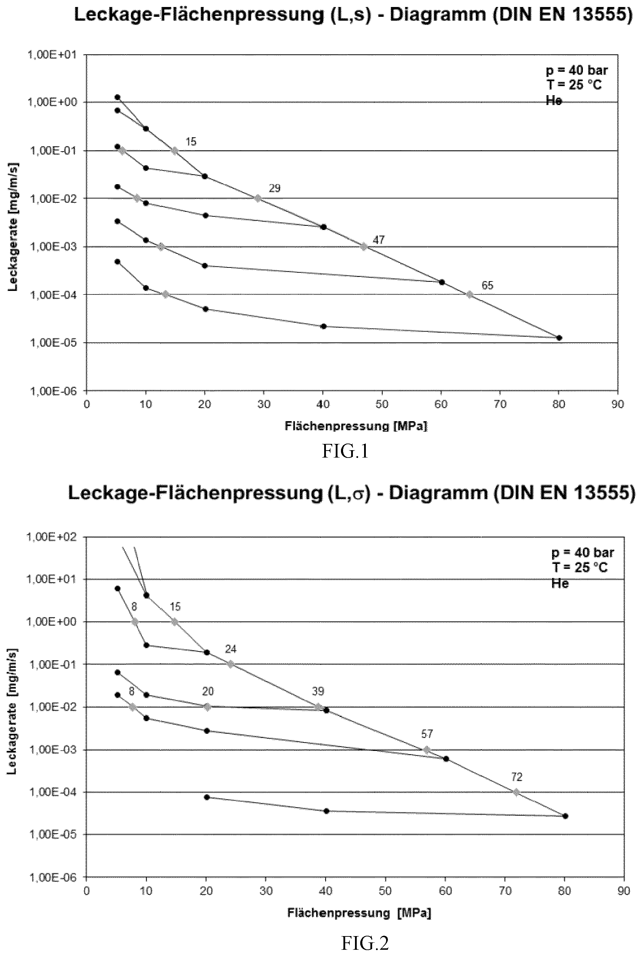

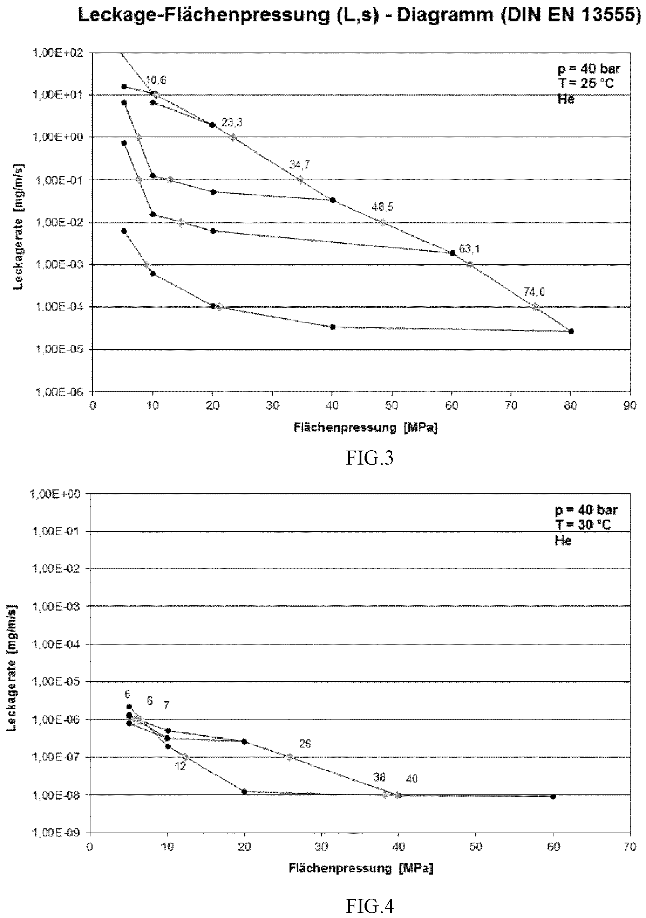

Fig. 1 bis Fig. 3 zeigen Diagramme der Leckrate bzw. Leckagerate in mg/m/s (Emissionsrate) in Abhängigkeit von der Flächenverpressung (in MPa) unterschiedlicher Weichstoffdichtungen bei einem Innendruck von 40 bar und einer Temperatur von 25°C für Helium gezeigt (entspricht der Norm DIN EN 13555). Fig. 1 zeigt dabei ein Leckagediagramm einer handelsüblichen Faserweichstoffdichtung ohne Randeinfassung, Fig. 2 ein Leckagediagramm einer handelsüblichen Faserweichstoffdichtung mit metallischer Innen-Einfassung mit einer Blechstärke von 0,10 mm und Fig. 3 ein Leckagediagramm einer handelsüblichen Faserweichstoffdichtung mit einer metallischen Innen-Einfassung mit einer Blechstärke von 0,15 mm.

Mit Bezug auf Fig. 3 wird üblicherweise eine 0,15 mm starke Einfassung verwendet. Diese bewirkt eine starke Verschlechterung des Leckageverhaltens (benötigte Flächenpressung um Leckagerate 1,0E-02 zu erreichen: 49 MPa, statt wie bei Variante ohne metallische Einfassung bei 29 MPa).

Um diesen negativen Einfluss abzuschwächen, kommt es vermehrt zum Einsatz einer dünneren Einfassung (0,10 mm statt wie üblich 0,15 mm, Fig. 2). Diese besitzt zwar im Vergleich zur stärkeren Einfassung ein besseres Leckageniveau, im Vergleich zu einer Dichtung ohne metallische Einfassung ist jedoch eine deutliche Verschlechterung der Leckage feststellbar (benötigte Flächenpressung um Leckagerate 1,0E-02 zu erreichen: 39 MPa, statt wie bei ungebördelter Variante bei 29 MPa).

Eine dünnere Einfassung (0,10 mm) schwächt die Leckageverschlechterung im Vergleich zur Standard-Einfassung ab. Gleichzeitig wird jedoch der Vorteil der "mechanischen Verstärkung" reduziert. Folglich muss aktuell immer ein Kompromiss zwischen "mechanischer Verstärkung" und "Leckageverschlechterung" eingegangen werden, wie in Fig. 1-3 zu erkennen ist.

### Kurze Beschreibung der Erfindung

Um die oben beschriebenen Nachteile im aktuellen Stand der Technik auszuräumen, stellt die vorliegende Erfindung eine verbesserte Weichstoffdichtung bereit.

Die vorliegende Erfindung wird dabei durch den beigefügten Anspruch 1 bereitgestellt. Vorteilhafte Ausführungsformen sind in den abhängigen Ansprüchen definiert.

Demgemäß stellt die vorliegende Erfindung eine Weichstoffdichtung bereit, umfassend ein Weichstoffmaterial in der Form eines (bevorzugt flachen und weiter bevorzugt runden) Rings und mindestens einer Randeinfassung. Die Randeinfassung umfasst insbesondere einen Metall-Verbundwerkstoff bzw. Metall-Kompositwerkstoff, der eine Metalllage und eine Polymerlage umfasst. Mit Kompositwerkstoff ist in der vorliegenden Erfindung insbesondere ein Schichtaufbau unterschiedlicher Materialien gemeint. In einer speziellen Ausführungsform besteht die Randeinfassung aus der Metalllage und der Polymerlage.

In einer Ausführungsform der Weichstoffdichtung ist die Metalllage der Randeinfassung zwischen dem Weichstoffmaterial der Weichstoffdichtung und der Polymerlage angeordnet.

In einer Ausführungsform der Weichstoffdichtung ist die Polymerlage die äußerste Lage der Randeinfassung der Weichstoffdichtung und steht im eingebauten Zustand in direktem Kontakt zu einer abzudichtenden Fläche.

In einer Ausführungsform der Weichstoffdichtung umfasst das Weichstoffmaterial ein Material, das ausgewählt ist aus der Gruppe, bestehend aus Graphit, Glimmer, insbesondere Phlogopit-Glimmer, Muskovit-Glimmer, oder Vermiculite, Aramidfasern, Nitril-Butadien-Kautschuk (NBR-Kautschuk), Polytetrafluorethylen (PTFE), Fluorkarbon-Kautschuk bzw. Fluorkautschuk (FKM, veraltet auch FPM) und einer Kombination dieser Materialien.

In einer Ausführungsform der Weichstoffdichtung umfasst die Polymerlage Fluorpolymer, z.B. Fluorkautschuk (FKM bzw. FPM) und/oder PTFE, und in einer weiterhin bevorzugten Ausführungsform umfasst die Polymerlage FKM. In einer speziellen Ausführungsform besteht die Polymerlage aus Fluorpolymer, z.B. FKM, FPM, PTFE oder einer Kombination dieser Materialien, und in einer anderen bevorzugten Ausführungsform aus FKM, FPM oder PTFE. Es sei angemerkt, dass FKM viele vorteilhafte Eigenschaften aufweist, die die Vorteile der vorliegenden Erfindung voll unterstützen. Jedoch sollte die vorliegende Erfindung keinesfalls auf die Verwendung von FKM eingeschränkt werden, da viele weitere Polymere, insbesondere Fluorpolymere und deren Mischungen für die Verwendung als Polymer der vorliegenden Erfindung geeignet sind.

In einer Ausführungsform der Weichstoffdichtung umfasst die Metalllage Edelstahl. In einer speziellen Ausführungsform besteht die Metalllage aus Edelstahl.

In einer Ausführungsform der Weichstoffdichtung steht das Weichstoffmaterial der Weichstoffdichtung in direktem Kontakt zu einer abzudichtenden Fläche.

In einer Ausführungsform der Weichstoffdichtung ist mindestens eine Randeinfassung ein Innenbördel oder ein Außenbördel. Es sei angemerkt, dass die Weichstoffdichtung gemäß der vorliegenden Erfindung auch eine Innen- und eine Außenrandeinfassung, z.B. einen Innen- und einen Außenbördel umfassen kann.

In einer Ausführungsform der Weichstoffdichtung ist mindestens eine Randeinfassung aus einem Kompositblech gefertigt, das eine Metalllage umfasst, die mit einem Polymer beschichtet wurde. In einer besonders bevorzugten Ausführungsform besteht die Polymerbeschichtung im Wesentlichen aus Fluorpolymer, weiterhin bevorzugt aus FKM.

Mit Bezug auf Fig. 4, die ein Leckage-Flächenpressung-Diagramm einer erfindungsgemäßen Weichstoffdichtung mit einer Innenrandeinfassung aus einem Polymer-Metall-Kompositwerkstoff zeigt, ist die erfindungsgemäße Weichstoffdichtung in der Lage nicht nur die Nachteile herkömmlicher metallisch eingefasster Weichstoffdichtungen auszuräumen, sondern verbessert darüber hinaus auch die Dichtleistung einer entsprechenden Weichstoffdichtung ohne Metalleinfassung (siehe zum Vergleich Fig. 1).

Im eingebauten Zustand ist eine herkömmliche Randeinfassung nicht in der Lage sich ausreichend an Unebenheiten in der abzudichtenden Fläche anzupassen. Im Bereich der herkömmlichen Metalleinfassung selbst besteht demnach kaum eine Dichtwirkung. Zudem bildet die herkömmliche Randeinfassung auch eine Begrenzung für die mögliche Verpressungs- oder Kompressionstiefe des Weichstoffmaterials, da die Metalleinfassung nur bis zu einem gewissen Grad ohne Zerstörung verformbar ist.

In der vorliegenden Erfindung dient die Polymerschicht dazu die Anpassung an Unebenheiten der abzudichtenden Fläche im Bereich der Randeinfassung zu verbessern. Somit trägt die Randeinfassung selbst erheblich zu abdichtenden Wirkung der Weichstoffdichtung bei.

Die vorliegende Erfindung erreicht somit das, was die Entwicklung von Metalleinfassungen für Weichstoffdichtungen erst angetrieben hat, nämlich der Wunsch nach einer vorteilhaften Kombination einer guten Leckageleistung mit den Vorzügen einer erhöhten Stabilität und Schutz des Weichstoffmaterials durch die Metalleinfassung.

### Kurze Beschreibung der Zeichnungen

Fig. 1 ist ein Leckage-Flächenpressung-Diagramm einer herkömmlichen Faserweichstoffdichtung ohne Randeinfassung.
Fig. 2 ist ein Leckage-Flächenpressung-Diagramm einer herkömmlichen Faserweichstoffdichtung mit einer metallischen 0,10 mm Innenrandeinfassung.
Fig. 3 ist ein Leckage-Flächenpressung-Diagramm einer herkömmlichen Faserweichstoffdichtung mit einer metallischen 0,15 mm Innenrandeinfassung.
Fig. 4 ist ein Leckage-Flächenpressung-Diagramm einer erfindungsgemäßen Weichstoffdichtung mit einer Innenrandeinfassung aus einem Polymer-Metall-Kompositwerkstoff.
Fig. 5 ist eine Perspektivansicht einer Weichstoffdichtung gemäß einer bevorzugten Ausführungsform der vorliegenden Erfindung.
Fig. 6 ist eine Querschnittsansicht entlang der Linie A der erfindungsgemäßen Weichstoffdichtung der Fig. 5.
Fig. 7 ist eine vergrößerte Ansicht des Abschnitts B in Fig. 6.

### Ausführliche Beschreibung der Ausführungsformen

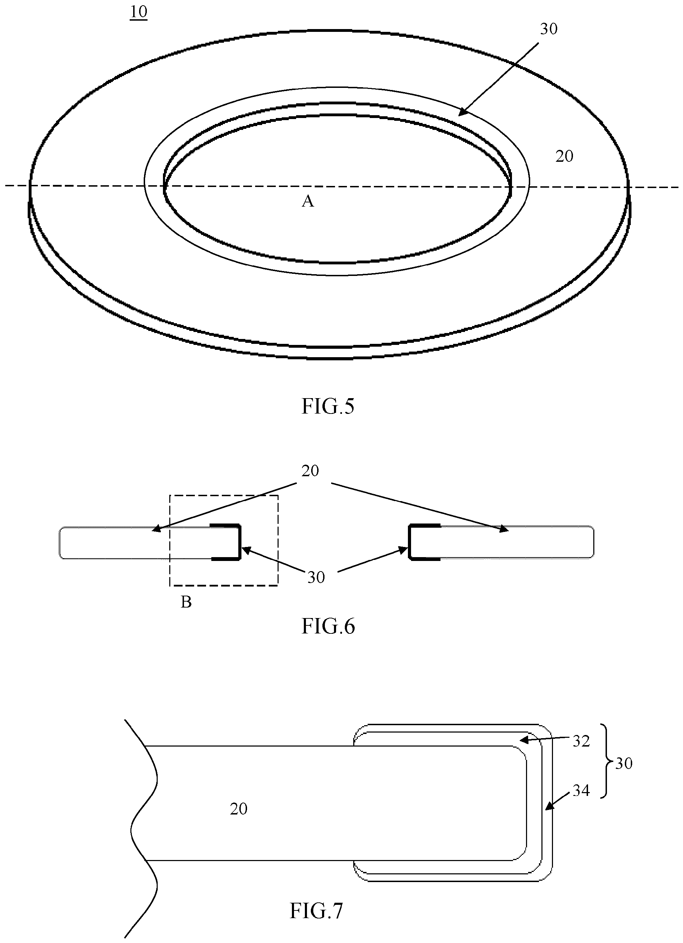

Fig. 5 ist eine Perspektivansicht einer Weichstoffdichtung gemäß einer bevorzugten Ausführungsform der vorliegenden Erfindung. Fig. 6 ist eine Querschnittsansicht entlang der Linie A der erfindungsgemäßen Weichstoffdichtung der Fig. 5. Fig. 7 ist eine vergrößerte Ansicht des Abschnitts B in Fig. 6.

Mit Bezug auf Fig. 5-7 umfasst eine Weichstoffdichtung 10 in einer bevorzugten Ausführungsform der vorliegenden Erfindung ein Weichstoffmaterial 20 in der Form eines flachen Rings und mindestens einer Randeinfassung 30, wobei die Randeinfassung 30 einen Metall-Kompositwerkstoff umfasst, der eine Metalllage 32 und eine Polymerlage 34 umfasst. Die Metalllage 32 der Randeinfassung 30 ist bevorzugt zwischen dem Weichstoffmaterial 20 und der Polymerlage 34 angeordnet, d.h. die Metalllage trennt das Weichstoffmaterial von der Polymerlage.

Die Polymerlage 34 ist weiterhin bevorzugt die äußerste Lage der Randeinfassung 30 und steht im eingebauten Zustand in direktem Kontakt zu einer abzudichtenden Fläche. Die abzudichtende Fläche kann dabei eine Flanschfläche (nicht gezeigt) im Apparatebau oder Rohrleitungsbau sein. Jedoch ist die vorliegende Erfindung nicht auf ein spezielles Anwendungsgebiet beschränkt. Es sei weiterhin angemerkt, dass die Figuren lediglich beispielhaft eine Innenrandeinfassung einer Weichstoffdichtung zeigen. Eine entsprechende Randeinfassung kann stattdessen auch am Außenrand der Weichstoffdichtung vorgesehen sein oder es ist zugleich eine Innenrandeinfassung und eine Außenrandeinfassung gemäß der Erfindung vorgesehen. Die entsprechende Auswahl wird üblicherweise abhängig vom beabsichtigten Einsatzgebiet der Dichtung vorgesehen (welches Medium innen und außen vorliegt, Über- oder Unterdruck, Temperaturgradienten etc.).

In einer Ausführungsform weist die Weichstoffdichtung 10 wenigstens eine, bevorzugt wenigstens drei Öffnungen auf (nicht gezeigt), die zur Passage eines Befestigungselements, z.B. einen Bolzen eines Rohrflansches, dienen.

In einer Ausführungsform umfasst das Weichstoffmaterial ein Material, das ausgewählt ist aus der Gruppe, bestehend aus Graphit, Glimmer, insbesondere Phlogopit-Glimmer, Muskovit-Glimmer oder Vermiculite, Aramidfasern, Nitril-Butadien-Kautschuk, FKM, Polytetrafluorethylen (PTFE), expandiertes Polytetrafluorethylen (ePTFE) und einer Kombination dieser Materialien. Generell sind auch andere Materialien, die für Weichstoffdichtungen verwendbar sind, geeignet, um gemäß der vorliegenden Erfindung mit einer Metall-Polymer-Kompositrandeinfassung ausgestattet zu werden, je nach gewünschtem Anwendungsgebiet. Es sollte daher verstanden werden, dass die vorliegende Erfindung nicht auf eine spezielle Auswahl an Weichstoffmaterial einzuschränken ist.

Ein besonders bevorzugtes Material für die Polymerlage 34 ist Fluorpolymer, weiterhin bevorzugt FKM. Es lässt sich mechanisch gut mit einer Metalllage 32 verbinden, ist flexibel genug, um sich schnell an Unebenheiten der abzudichtenden Fläche anzupassen und weist eine gute chemische Widerstandsfähigkeit auf. Ein Bevorzugtes Material für die Metalllage 32 ist Edelstahl. Jedoch sind je nach Anwendung auch andere widerstandsfähige Metalle oder Metalllegierungen als Ausgangsstoff für die Metalllage 32 der Randeinfassung 30 der vorliegenden Erfindung denkbar und die vorliegende Erfindung sollte nicht auf Edelstahl beschränkt werden.

In einer bevorzugten Ausführungsform ist die Randeinfassung 30 aus einem Kompositblech gefertigt, das eine Metalllage umfasst, die mit einem Polymer beschichtet wurde. Geeignete Beschichtungstechniken sind hinlänglich bekannt, z.B. Druckbeschichten des Fuorpolymers, bevorzugt FKM, auf eine zuvor angeraute Fläche, etwa durch Sandstrahlen oder einen Ätzvorgang, oder ein Beschichten mittels einer elastischen Acryldispersionsbeschichtung.

Zusammengefasst ist eine herkömmliche Randeinfassung im eingebauten Zustand nicht in der Lage sich ausreichend an Unebenheiten in der abzudichtenden Fläche anzupassen. Im Bereich der herkömmlichen Metalleinfassung selbst besteht demnach kaum eine Dichtwirkung. Zudem bildet die herkömmliche Randeinfassung auch eine Begrenzung für die mögliche Verpressungs- oder Kompressionstiefe des Weichstoffmaterials, da die Metalleinfassung nur bis zu einem gewissen Grad ohne Zerstörung verformbar ist.

In der vorliegenden Erfindung dient die Polymerschicht dazu die Anpassung an Unebenheiten der abzudichtenden Fläche im Bereich der Randeinfassung zu verbessern. Somit trägt die Randeinfassung selbst erheblich zu abdichtenden Wirkung der Weichstoffdichtung bei.

### Beispiele

Im Allgemeinen werden folgende Werkstoffgruppen und Materialien zur Herstellung der Weichstoffdichtungen bzw. des Weichstoffmaterials der vorliegenden Erfindung verwendet:
- 0-100% Graphit - expandiert oder nicht expandiert, mit einem Reinheitsgrad von mindestens 80%
- 0-100% NBR - nicht hydriert oder in hydrierter Form (HNBR)
- 0-100% PTFE
- 0-95% Funktionsfüllstoffe
- 0-30% Aramidfasern
- 0-80% Edelstahl (in Form von Einlagen z.B. Streckmetall, Glattblech, Spießblech)
- 0-5% Kautschukchemikalien

Im Folgenden werden einige beispielhafte Rezepturen (in Gew.-%) angegeben, die jedoch nicht zur Beschränkung der vorliegenden Erfindung ausgelegt werden sollten. Die Variationsmöglichkeiten der einzelnen Bestandteile sind nahezu unbegrenzt und es ist daher unmöglich eine "Standardrezeptur" anzugeben.

Beispielbereiche für eine Faser-Weichstoffdichtung:
- 10-30 %, bevorzugt 15-25 %NBR
- 5-15 %, bevorzugt 8-12% Aramidfasern
- 58-73 %, bevorzugt 62-69 % Funktionsfüllstoffe (z.B. Siliciumdioxid, Bariumsulfat, Kaolin etc.)
- 0-12%, bevorzugt 1-8 % Kautschukchemikalien (z.B. Schwefel, Zinkoxid, MBT, ZBEC, TMTD, etc.)

Beispielbereiche für eine Graphit-Weichstoffdichtung :
- 60-90%, bevorzugt 70-85% expandierter Graphit, Reinheit 99%
- 10-40%, bevorzugt 15-30% Edelstahl (z.B. 1.4404 / AISI 316L)

Beispielbereiche für eine Graphit-Faser-Weichstoffdichtung:
- 5-35%, bevorzugt 15-25 % NBR
- 5-15 %, bevorzugt 8-12% Aramidfasern
- 5-15 %, bevorzugt 8-12% Funktionsfüllstoffe (z.B. Siliciumdioxid, Bariumsulfat, Kaolin etc.)
- 40-70%, bevorzugt 50-65 % Graphit, nicht expandiert, Reinheit 90%
- 0-15, bevorzugt 1-6 % Kautschukchemikalien (z.B. Schwefel, Zinkoxid, MBT, ZBEC, TMTD, etc.)

Beispielbereiche für eine Glimmer-Weichstoffdichtung:
- 80-98%, bevorzugt 85-95% Glimmer (Phlogopit)
- 2-20%, bevorzugt 5-15% Edelstahl

Eine beispielhafte technische Charakterisierung einer typischen Weichstoffdichtung gemäß der vorliegenden Erfindung ist im Folgenden bereitgestellt:
- Dichte: 0,50 - 2,0 g/cm³
- Dicke: 0,5 mm - 4,0 mm
- Kompressibilität (nach ASTM F 36 J): 2-50%.

Eine entsprechende technische Charakterisierung der metallischen Einfassung auf Basis Metall-Polymer-Kompositwerkstoff gemäß der vorliegenden Erfindung ist hier beispielhaft angegeben:
- Metallwerkstoff: Edelstahl (z.B. V2A oder V4A)
- Dicke Metall: 0,10 mm - 0,30 mm
- Polymerwerkstoff: Fluorpolymer z.B. FKM, FPM, PTFE
- Polymerschicht Dicke: 0,1 µm - 100 µm, bevorzugt 0,5µm - 30 µm.

## Patentansprüche

1. Weichstoffdichtung, umfassend:
ein Weichstoffmaterial in der Form eines flachen Rings; und
mindestens einer Randeinfassung, **dadurch gekennzeichnet, dass** die Randeinfassung einen Metall-Kompositwerkstoff umfasst, der eine Metalllage und eine Polymerlage umfasst, wobei das Weichstoffmaterial ein Material umfasst, das ausgewählt ist aus der Gruppe, bestehend aus Graphit, Glimmer, insbesondere Phlogopit-Glimmer, Aramidfasern, Nitril-Butadien-Kautschuk, Polytetrafluorethylen, PTFE, expandiertes Polytetrafluorethylen, ePTFE, und einer Kombination dieser Materialien.

2. Weichstoffdichtung gemäß Anspruch 1, wobei die Metalllage der Randeinfassung zwischen dem Weichstoffmaterial der Weichstoffdichtung und der Polymerlage angeordnet ist.

3. Weichstoffdichtung gemäß einem der vorstehenden Ansprüche, wobei die Polymerlage die äußerste Lage der Randeinfassung der Weichstoffdichtung ist und im eingebauten Zustand in direktem Kontakt zu einer abzudichtenden Fläche steht.

4. Weichstoffdichtung gemäß einem der vorstehenden Ansprüche, wobei die Polymerlage ein Fluorpolymer umfasst.

5. Weichstoffdichtung gemäß einem der vorstehenden Ansprüche, wobei die Metalllage Edelstahl umfasst.

6. Weichstoffdichtung gemäß einem der vorstehenden Ansprüche, wobei das Weichstoffmaterial der Weichstoffdichtung in direktem Kontakt zu einer abzudichtenden Fläche steht.

7. Weichstoffdichtung gemäß einem der vorstehenden Ansprüche, wobei die mindestens eine Randeinfassung ein Innenbördel oder ein Außenbördel ist.

8. Weichstoffdichtung gemäß einem der vorstehenden Ansprüche, wobei die mindestens eine Randeinfassung aus einem Kompositblech gefertigt ist, das eine Metalllage umfasst, die mit einem Polymer beschichtet wurde.

9. Weichstoffdichtung gemäß Anspruch 8, wobei das Polymer der Polymerlage aus Fluorpolymer besteht.

10. Weichstoffdichtung gemäß einem der vorstehenden Ansprüche, wobei das Polymer der Polymerlage wenigstens eines von Fluorkautschuk und Polytetrafluorethylen umfasst.

11. Weichstoffdichtung gemäß einem der vorstehenden Ansprüche, wobei das Polymer der Polymerlage aus Fluorkautschuk oder Polytetrafluorethylen besteht.

12. Weichstoffdichtung gemäß einem der vorstehenden Ansprüche, wobei das Polymer der Polymerlage aus Fluorkautschuk besteht.

13. Rohrleitungssystem einer industriellen Großanlagen mit einer Flansch- oder Deckeldichtung in Form einer Weichstoffdichtung gemäß einem der vorstehenden Ansprüche.

14. Verwendung einer Weichstoffdichtung gemäß einem der vorstehenden Ansprüche in einem Rohrleitungssystem einer industriellen Großanlagen als Flansch- oder Deckeldichtung.
